# EUROPÄISCHE PATENTSCHRIFT

(11) **EP 0 381 923 B1**
(45) Veröffentlichungstag und Bekanntmachung des Hinweises auf die Patenterteilung: **09.06.1993**
(21) Anmeldenummer: 90100117.2
(22) Anmeldetag: 04.01.1990
(51) Int. Cl.: H02G 5/04

(54) **Stromschiene sowie ein Montageverfahren hierfür**
Bus bar and a mounting method therefor
Barre omnibus et un procédé de montage à cet effet

(30) Priorität: 10.02.1989 DE 3903950
(43) Veröffentlichungstag der Anmeldung: 16.08.1990
(73) Patentinhaber: WAMPFLER GMBH, D-79574 Weil am Rhein (DE)
(72) Erfinder: Wampfler, Manfred, D-7858 Weil am Rhein (DE); Bormann, Uwe, D-7851 Rümmingen (DE)
(74) Vertreter: Charrier, Rolf, Dipl.-Ing.

(56) Entgegenhaltungen:
- FR-A- 2 357 090
- FR-A- 2 401 791

## Beschreibung

Die Erfindung betrifft eine Stromschiene nach dem Oberbegriff des Anspruchs 1 sowie ein Montageverfahren hierfür.

Stromschienen sind in einer Reihe von Ausführungsformen bekannt. Bei einer ersten Ausführungsform weist das Schienenteil einen etwa halbkreisförmigen Querschnitt auf. Es ist von einem ebenfalls halbkreisförmigen Isolierteil umgeben, dessen Enden U-förmig ausgebildet sind welche die Enden des Schienenteils umgreifen. Über den so gebildeten Spalt tritt ein Stromabnehmer in Kontakt mit dem Schienenteil. Nachteilig ist hierbei, daß die einzelnen Stromschienen nur eine begrenzte Länge von einigen Metern aufweisen, so daß für längere Stromschienenanlagen die einzelnen Stromschienen miteinander verbunden werden müssen. An den Stoßstellen sind spezielle Verbinderkappen erforderlich.

Die gleichen Nachteile weist eine weitere Stromschiene auf, bei welcher das Schienenteil H-förmig ausgebildet ist. Es wird von einem Isolierteil umgeben, welches einen im wesentlichen U-förmigen Querschnitt aufweist, dessen Schenkelenden ebenfalls einen U-förmigen Querschnitt besitzen. Diese beiden Enden umgreifen die beiden unteren Enden des Schienenteils. Auf diese Weise wird ein Spalt gebildet, über den ein Stromabnehmer in Kontakt treten kann mit dem Mittelschenkel des H-förmigen Schienenteils.

Eine weitere Stromschiene ist Gegenstand des DE-GM 71 15 690. Das im Anlieferungszustand bereits U-förmig ausgebildete Isolierteil weist im Bereich seines Mittelteils bei den U-Schenkeln jeweils eine Nut auf. In diese Nuten wird das Schienenteil eingeschoben. Weiterhin weist das Isolierteil im Bereich des Mittelteils zwei etwa in Verlängerung des Mittelteils verlaufende Vorsprünge und die Nut des Trägers im Bereich des Nutengrunds zwei Ausnehmungen auf. Nachdem das Schienenteil in das Isolierteil eingeschoben ist, wird das Isolierteil in die Nut des Trägers eingeschoben, wobei die Vorsprünge am Isolierteil in die Ausnehmungen am Träger eingreifen.

Diese Schiebemontage vom Schienenteil in das Isolierteil und vom Isolierteil in den Träger ist umständlich und ermöglicht wegen der dabei zu überwindenden Reibungskräfte Stromschienen von nur begrenzter Länge.

Die Stromschiene nach dem DE-GM 85 09 972 weist einen U-förmigen Schienenteil auf, dessen U-Schenkel außenseitig mit Rastvertiefungen versehen sind. Der das Schienenteil haltende Träger aus Kunststoff ist ebenfalls U-förmig ausgebildet und seine U-Schenkel sind mit Rastnasen versehen. Zur Montage wird das Schienenteil in den Träger eingedrückt, bis die Rastnasen mit den Rastvertiefungen verrasten. Nachteilig ist hierbei, daß die Schienenteile nicht berührungssicher sind und damit die Stromschiene nicht den Sicherheitsbestimmungen entspricht.

Die Stromschiene nach der DE-OS 30 09 054 weist ein aus einem elastischen Material bestehendes Isolierteil auf, das im Anlieferungszustand auf eine Trommel aufgewickelt flach ausgebildet ist und bei der Montage zu einer Ringform deformiert wird, wobei die dann aneinander stoßenden Längskanten des Isolierteils einen Längsschlitz für den Durchtritt eines Stromabnehmers und damit Dichtlippen bilden. Das zur Ringform deformierte Isolierteil wird durch federnde geschlitzte Stahlrohrabschnitte in dieser Form gehalten.

Die Stromschiene nach der US-PS 34 48 203 weist ein im Anlieferungszustand auf eine Rolle aufgewickeltes im wesentlichen flaches Trägerteil auf, das mit drei U-förmigen Vertiefungen versehen ist, die jeweils ein Isolierteil aufnehmen, das seinerseits ein Schienenteil aufnimmt. Zur Herstellung der Stromschiene werden die beiden Bereiche des Trägerteils zwischen den U-förmigen Vertiefungen gefalzt, so daß das Trägerteil U-Form annimmt, bei dem das Mittelteil und die beiden U-Schenkel jeweils ein Schienenteil aufweisen. Die Isolierteile und damit die Schienenteile sind jedoch nur ungenügend in den U-förmigen Vertiefungen des Trägerteils gesichert.

Bei der Stromschiene nach der DE-OS 26 18 229 sind die freien Enden der V-Schenkel eines U-förmigen Isolierteils stirnseitig mit je einer hinterschnittenen Nut versehen, in die jeweils der Kopf einer elastischen Dichtlippe einklippbar ist. Die beiden Dichtlippen überbrücken den vom Isolierteil gebildeten Spalt, über den ein Stromabnehmer ins Innere des Isolierteils eingreift.

Eine Stromschiene der eingangs genannten Art ist Gegenstand der FR-A-23 57 090. Die U-Schenkel des U-förmigen Isolierteils weisen außenseitig in Abständen Vorsprünge auf, die in Ausnehmungen der U-Schenkel der U-förmigen Nut des Trägers verrastet sind. Das Schienenteil ist ebenfalls U-förmig ausgebildet und seine U-Schenkel greifen in das Isolierprofilteil ein und werden von dessen U-Schenkel eingeklemmt, während das Mittelteil des Schienenteils die U-förmige Nut des Isolierteils abdeckt und somit freiliegt.

Es besteht die Aufgabe, die Stromschiene so auszubilden, daß sie eine nahezu beliebige Länge aufweisen kann und einfach in der Montage ist.

Gelöst wird diese Aufgabe mit den kennzeichnenden Merkmalen des Anspruches 1 und hinsichtlich der Montage durch die Merkmale des Anspruchs 13. Vorteilhafte Ausgestaltungen sind den Unteransprüchen entnehmbar.

Zwei Ausführungsbeispiele werden nachfolgend an Hand Zeichnungen näher erläutert. Es zeigen:
- Fig. 1: einen Querschnitt durch das Schienentei;
- Fig. 2: einen Querschnitt durch das Isolierteil im Anlieferungszustand;
- Fig. 3: einen Querschnitt durch die vorgenannten Teil und einen Träger zur Verdeutlichung des Montagevorgangs;
- Fig. 4: einen Querschnitt durch Schienen- und Isolierteil in Montagestellung und
- Fig. 5: einen Querschnitt durch die Stromschiene bei montierten Schienen- und Isolierteilen,
- Fig. 6 und 7: den Figur 2 und 5 entsprechende Schnitte bei einem zweiten Ausführungsbeispiel.

Das Schienenteil 1 ist aus einem rechteckigen Flachmaterial hergestellt, das V-förmig verformt ist. Auf diese Weise weist das Schienenteil eine erste V-förmige Flachseite 2 und eine weitere V-förmige Flachseite 3 auf. Die Schmalseiten 4 verlaufen schräg zueinander, derart, daß der Abstand der Kanten zwischen den Seiten 3 und 4 größer ist als der Abstand zwischen den Kanten der Seiten 2 und 4. Im Anlieferungszustand ist das Schienenteil zu einer Rolle gewickelt.

Das Isolierteil 5 ist im Anlieferungszustand flach ausgebildet und ebenfalls zu einer Rolle gewickelt.

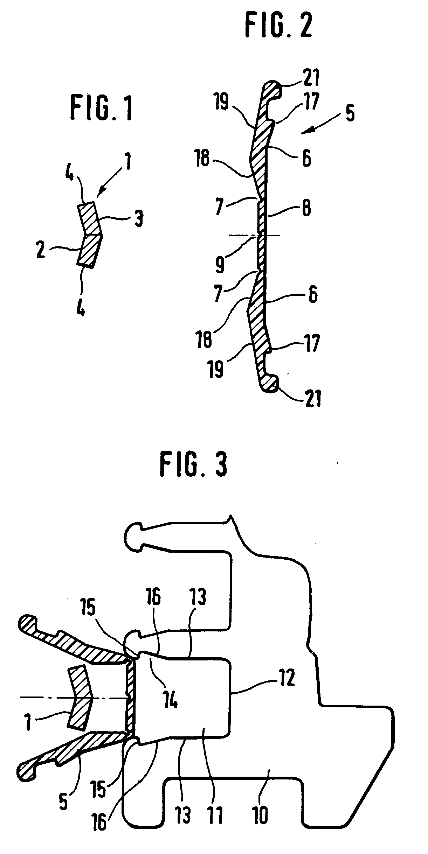

Er weist zwei U-Schenkel 6 auf, die jeweils über ein Gelenk 7 mit einem Mitteilteil 8 verbunden sind, das mittig ein weiteres Gelenk 9 aufweist. In Figur 2 ist das Isolierteil 5, das aus einem elastischen Kunststoff besteht im Anlieferungszustand dargestellt, bei welchem die flachen Schenkel 6 mit dem flachen Mittelteil 8 fluchten.

Der Träger 10 für die Stromschiene weist eine U-förmige Nut 11 auf. Diese Nut 11 besitzt einen flachen Nutengrund 12 sowie zwei parallel zueinander verlaufende Seitenwände 13, welche rechtwinklig zum Nutengrund 12 verlaufen. Gegenüber dem Nutengrund 12 weisen die Seitenwände keilförmige Rastvertiefungen 14 auf. Diese Rastvertiefungen 14 bestehen aus einer Rastkante 15, welche rechtwinklig zu den Seitenwänden 13 verläuft und an welches sich eine schrägverlaufende Flachseite 16 anschließt, die in Richtung des Nutengrunds 12 sich erstreckt.

Die Schenkel 6 sind an ihrer Außenseite jeweils mit einer Rastnase 17 versehen, wobei diese Rastnasen 17 entsprechend den Rastvertiefungen 14 ebenfalls keilförmig ausgebildet sind. Die Rastnasen 17 verlaufen also kongruent zu den Rastvertiefungen 14.

Die Innenseiten der Schenkel 6 weisen einen V-förmigen Verlauf auf. Werden die beiden Schenkel 6 um die Gelenke 7 gegeneinander geschwenkt, bis die Schenkel 6 parallel zueinander verlaufen, dann weisen die Innenseiten der Schenkel 6 einen unteren Abschnitt 18 auf, die zueinander einen Verlauf aufweisen wie die Schmalseiten 4 des Schienenteils 1. Die unteren Abschnitte 18 verlaufen also zueinander V-förmig, wobei die Spitze des V in Richtung der Schenkelenden weist.

Die oberen Abschnitte 19 der Innenseiten der Schenkel 6 verlaufen ebenfalls V-förmig zueinander, jedoch weist die Spitze des V in Richtung auf das Mittelteil 8 des Isolierteils 5.

Verlaufen die Schenkel 6 parallel zueinander, dann wird das Schienenteil 1 zwischen den unteren Abschnitten 18 festgeklemmt. Es liegt dann mit seiner anderen Flachseite 3 gegen das Mittelteil 8 des Isolierteils 5 an, wobei sich dieses Mittelteil 8 in folge des Gelenks 9 an die Form der Flachseite 3 anschmiegt.

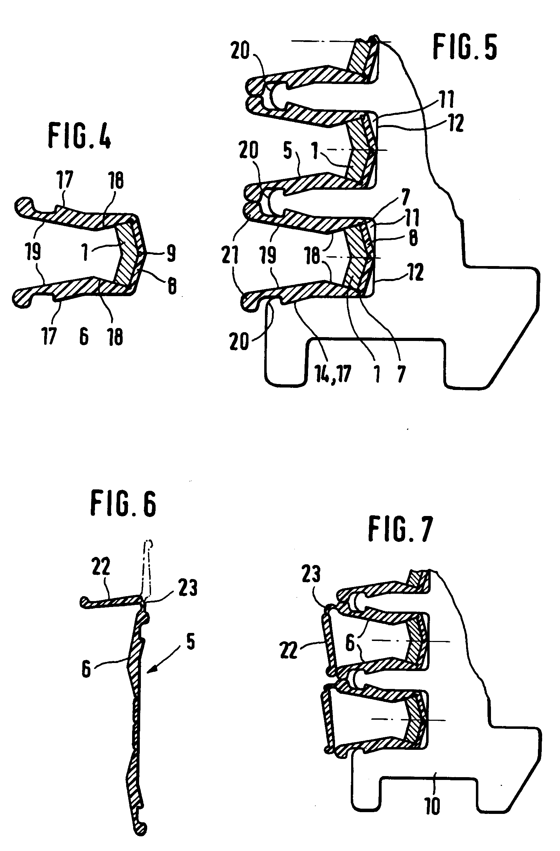

Zur Montage werden die Schenkel 6 um die Gelenke 7 gegeneinander geschwenkt und der Nut 11 des Trägers 10 zugeführt. In entsprechender Weise wird das Schienenteil 1 zwischen die Schenkel 6 zugeführt, wie dies die Figur 3 zeigt. Beim Einführen des Isolierteils 5 in die Nut 11 ist das Schienenteil 1 zwischen die unteren Abschnitte 18 eingeklemmt, wie dies die Figur 4 zeigt. Erreicht das Mittelteil 8 den Nutengrund 12, dann verrasten die Rastnasen 17 mit den Rastvertiefungen 14, wie dies die Figur 5 zeigt. Da die Schenkel 6 in folge der Gelenke 7 die Tendenz haben, die in Figur 2 gezeigte Stellung einzunehmen, wird eine sichere Verrastung der Rastnasen mit den Rastvertiefungen 14 erreicht.

Zum leichteren Einführen des Isolierteils 5 sind die Ränder 20 der Nut 11 verrundet.

Die Konizität der oberen Abschnitte 19 erleichtert das Einführen eines Stromabnehmers, der in Kontakt mit der Flachseite 2 des Schienenteils 1 tritt. Durch die Konizität der unteren Abschnitte 18 ist ein sicherer Halt des Schienenteils 1 gewährleistet.

Die Schenkel 6 weisen an ihren freien Ende über die Nut 11 überstehende Bereiche 21 auf. Die Abstände zwischen benachbarten Nuten 11 sind so gewählt, daß die Bereiche 21 von benachbarten Isolierteilen 5 gegeneinander zur Anlage kommen, so daß die Stege zwischen den Nuten 11 lückenlos abgedeckt sind.

Bei den Ausführungsbeispielen nach den Figuren 6 und 7 ist an einem der Schenkel 6 eine Lippe 22 über ein zusätzliches Gelenk 23 angeformt, welche im Anlieferungszustand etwa rechtwinklig von diesem Schenkel 6 absteht. Vor dem Einsetzen des Isolierteils 5 kann dieses ebenfalls zu einer Rolle gewickelt werden, indem die Lippe in die Ebene der Schenkel 6 und des Mittelteils 8 geklappt wird. Im in die Nut 11 montierten Zustand überdeckt dann diese Lippe 22 den Spalt zwischen den Schenkeln 6 und schützt damit das Schienenteil 1 vor Verschmutzungen. Ein Schleifkontakt, der längs der Stromschiene verfährt, hebt die Lippe 22 an, die dabei um das Gelenk 23 schwenkt, worauf dann diese in die in Figur 7 gezeigte Lage zurückschwenkt, wenn der Schleifkontakt des Stromabnehmers weitergefahren ist.

Anstelle einer Lippe 22 können an beiden Schenkeln 6 je eine Lippe mit einem Gelenk vorgesehen sein, die den Spalt jeweils zur Hälfte überdecken.

## Patentansprüche

1. Stromschiene mit einem aus Metall bestehenden Schienenteil (1) und einem in einer U-förmigen Nut (11) eines Trägers (10) angeordneten U-förmigen Isolierteil (5), dessen U-Schenkel (6) mit der U-förmigen Nut (11) des Trägers (10) verrastet sind, dessen die U-Schenkel (6) verbindendes Mittelteil (8) längs des Nutengrunds (12) der U-förmigen Nut (11) verläuft und dessen U-Schenkel (6) die Schmalseiten (4) des Schienenteils (1) einklemmt, **dadurch gekennzeichnet**, daß das U-förmige Isolierteil (5) im nichteingebauten Zustand ein Band ist, dessen U-Schenkel (6) mit dem Mittelteil (8) fluchten und gelenkig verbunden sind, das bei der Montage zusammen mit dem Schienenteil (1) gegen den Nutengrund (12) geführt wird und hierbei die U-Schenkel (6) gegeneinander geklappt werden und voneinander wegfedernd mit den Seitenwänden (13) der U-förmigen Nut (12) verrasten, und daß das Schienenteil (1), das gegen das Mittelteil (8) anliegt, flach ausgebildet ist.

2. Stromschiene nach Anspruch 1, dadurch **gekennzeichnet,** daß die Verrastung zwischen Isolierteil (5) und Träger (10) über Rastvertiefungen (14) und Rastnasen (17) erfolgt, die an den U-Schenkeln (6) und den Seitenwänden (13) der Nut (11) angeordnet sind.

3. Stromschiene nach Anspruch 2, dadurch **gekennzeichnet,** daß die Rastvertiefungen (14) an den Seitenwänden (13) der Nut (11) und die Rastnasen (17) an den U-Schenkeln (6) des Isolierteils (5) vorgesehen sind.

4. Stromschiene nach Anspruch 2 oder 3, dadurch **gekennzeichnet,** daß die Rastnasen (17) im Bereich der freien Enden der U-Schenkel (6) des Isolierteils (5) vorgesehen sind.

5. Stromschiene nach einem der Ansprüche 2 bis 4, dadurch **gekennzeichnet,** daß die Rastvertiefungen (14) und die Rastnasen (17) jeweils einen Keil bilden, dessen Rastkante (15) etwa quer zur Achse des von den U-Schenkeln (6) gebildeten Spalts verläuft und dessen Flachseiten (16) an die Rastkante (15) in Richtung des Nutengrunds (12) gesehen sich anschließt.

6. Stromschiene nach einem der Ansprüche 1 bis 5, dadurch **gekennzeichnet,** daß die U-Schenkel (6) des Isolierteils (5) über die Nut (11) überstehen und die überstehenden Bereiche (21) der U-Schenkel (6) des Isolierteils (5) benachbarter Stromschienen gegeneinander anliegen.

7. Stromschiene nach einem der Ansprüche 1 bis 6, dadurch **gekennzeichnet,** daß die Schmalseiten (4) des Schienenteils (1) schräg zueinander verlaufen, wobei die beiden Kanten zwischen den Schmalseiten (4) und der zur Anlage an das Mittelteil (8) des Isolierteils (5) kommenden Flachseite (3) des Schienenteils (1) zueinander einen größeren Abstand aufweisen als die beiden Kanten zwischen diesen Schmalseiten (4) und der Flachseite (2) des Schienenteils (1), die dem von den U-Schenkeln (6) des Isolierteils (5) gebildeten Spalt zugewandt ist und die einander zugewandten Innenseiten (18) dieser U-Schenkel (6) im Bereich der Schmalseiten (4) des Schienenteils (1) zur Schräge dieser Schmalseiten (4) kongruent ausgebildet sind, wenn das Isolierteil (5) mit dem Träger (10) verrastet ist.

8. Stromschiene nach Anspruch 7, dadurch **gekennzeichnet,** daß das Schienenteil (1) aus einem rechteckigen Material besteht, das mittig V-förmig verformt ist und dessen Spitze zum Nutengrund (12) weist.

9. Stromschiene nach Anspruch 8, dadurch **gekennzeichnet,** daß das Mittelteil (8) des Isolierteils (5) mittig ein weiteres Gelenk (9) aufweist.

10. Stromschiene nach einem der Ansprüche 1 bis 9, dadurch **gekennzeichnet,** daß die Innenseiten (19) der U-Schenkel (6) des Isolierteils (5) V-förmig in Richtung des Nutengrunds (12) zueinander verlaufen und sich dieser V-förmige Bereich (19) von der Spaltöffnung ab über etwa 2/3 der Länge der U-Schenkel (6) erstreckt.

11. Stromschiene nach einem der Ansprüche 1 bis 10, dadurch **gekennzeichnet,** daß die Ränder (20) der Nut (11) verrundet sind.

12. Stromschienen nach einem der Ansprüche 1 bis 11, dadurch **gekennzeichnet,** daß mindestens einer der U-Schenkel (6) des Isolierteils (5) an seinem freien Ende über ein Gelenk (23) eine Lippe (22) aufweist, die vom Gelenk (23) etwa rechtwinklig zu diesem U-Schenkel (6) gehalten wird und die im montierten Zustand den Spalt zwischen den U-Schenkeln (6) überdeckt.

13. Montageverfahren für eine Stromschiene nach einem der Ansprüche 1 bis 12, dadurch **gekennzeichnet,** daß das Schienenteil (1) und das Isolierteil (5) als Band jeweils von einer Rolle abgezogen und das Schienenteil (1) gegen das Mittelteil (8) des Isolierteils (5) und beide zusammen gegen den Nutengrund (12) des Trägers (10) geführt werden, wobei die U-Schenkel (6) gegeneinander geklappt werden, bis die U-Schenkel (6) mit den Seitenwänden (13) der Nut (11) des Trägers (10) verrasten.

## Claims

1. A conductor rail having a rail portion (1) consisting of metal and
arranged in a U-shaped groove (11) in a carrier (10) an insulating portion (5) in the shape of a U the arms (6) of which are snapped into the U-shaped groove (11) in the carrier (10) and the middle part (8) of which, connecting the arms (6) of the U, runs along the bottom (12) of the groove in the U-shaped groove (11) whilst the arms (6) of the U of the said insulating portion clamp the narrow sides (4) of the rail portion (1), **characterized in that** in the state when it is not built in, the U-shaped insulating part (5) is a strip of which the arms (6) of the U are in line with the middle part (8) and connected to it by hinges and which at assembly together with the rail portion (1) is led towards the bottom (12) of the groove and in doing so the arms (6) of the U become folded towards one another and snap into the sidewalls (13) of the U-shaped groove (12) by springing apart, and that the rail portion (1) which rests against the middle part (8) is made flat.

2. A conductor rail as in Claim 1, **characterized**
in that between the insulating portion (5) and the carrier (10) the snapping in is effected by catch depressions (14) and catch noses (17) arranged on the arms (6) of the U and sidewalls (13) of the groove (11).

3. A conductor rail as in Claim 2, **characterized**
in that the catch depressions (14) are provided on the sidewalls (13) of the groove (11) and the catch noses (17) on the arms (6) of the U of the insulating portion (5).

4. A conductor rail as in Claim 2 or 3, **characterized**
in that the catch noses (17) are provided in the region of the free ends of the arms (6) of the U of the insulating portion (5).

5. A conductor rail as in one of the Claims 2 to 4,
**characterized** in that the catch depressions (14) and catch noses (17) respectively form a wedge the catch edge (15) of which runs approximately transversely to the axis of the gap formed by the arms (6) of the U and the flat sides (16) of which, looking in the direction of the bottom (12) of the groove, adjoin the catch edge (15).

6. A conductor nail as inn one of the Claims 1 to 5,
**characterized** in that the arms (6) of the U of the insulating portion (5) stand up above the groove (11) and the projecting regions (21) of the arms (6) of the U of the insulating portion (5) of adjacent conductor nails nest against one another.

7. A conductor rail as in one of the Claims 1 to 6,
**characterized** in that the narrow sides (4) of the rail portion (1) run inclined with respect to one another, the two edges between the narrow sides (4) and the flat side (3) which comes into contact with the middle part (8) of the insulating portion (5) exhibiting a greater distance apart than the two edges between these narrow sides (4) and the flat side (2) of the rail portion (1) which faces the gap formed by the arms (6) of the U of the insulating portion (5), and the inner faces (18) opposite one another on these arms (6) of the U in the region of the narrow sides (4) of the rail portion (1) being made congruent with the bevels of these narrow sides (4), when the insulating portion (5) is snapped into the carrier (10).

8. A conductor rail as in Claim 7, **characterized**
in that the rail portion (1) consists of a rectangular material which is deformed centrally into a V-shape and the tip of which points at the bottom (12) of the groove.

9. A conductor rail as in Claim 8, **characterized**
in that the middle part (8) of the insulating portion (5) exhibits centrally a further hinge (9).

10. A conductor rail as in one of the Claims 1 to 9,
**characterized** in that the inner faces (19) of the arms (6) of the U of the insulating portion (5) run in the direction of the bottom (12) of the groove in the shape of a V with respect to one another and this V-shaped region (19) extends down from the opening of the gap over about 2/3 of the length of the arms (6) of the U.

11. A conductor rail as in one of the Claims 1 to 10,
**characterized** in that the edges (20) of the groove (11) are rounded.

12. A conductor rail as in one of the Claims 1 to 11,
**characterized** in that at least one of the arms (6) of the U of the insulating portion (5) exhibits at its free end above a hinge (23) a lip (22) which is held by the hinge (23) at about a right angle to this arm (6) of the U and which in the mounted state overlaps the gap between the arms (6) of the U.

13. A method of mounting for a conductor rail
as in one of the Claims 1 to 12, **characterized** in that the rail portion (1) and the insulating portion (5) are each drawn off a reel as a strip and the rail portion (1) is led towards the middle part (8) of the insulating portion (5) and both together are led towards the bottom (12) of the groove in the carrier (10), the arms (6) of the U being folded towards one another until the arms (6) of the U snap into the sidewalls (13) of the groove (11) in the carrier (10).

## Revendications

1. Barre omnibus comportant un élément de barre (1) réalisé en métal et un élément isolant (5) en forme de U disposé dans une rainure en forme de U d'un support 10, élément isolant dont les branches (6) en forme de U sont encastrées dans la rainure (11) en forme de U du support (10), dont l'élément central (8) reliant entre elles les branches (6) du U s'étend le long du fond (12) de la rainure (11) en forme de U et dont les branches (6) en forme de U enserrent les côtés étroits (4) de l'élément (1) de barre omnibus, caractérisée en ce que l'élément isolant (5) en forme de U est, à l'état non monté, une bande dont les branches (6) en forme de U sont alignées et articulées à l'élément central (8) qui, pendant le montage, est amené en même temps que l'élément (1) de barre omnibus contre le fond (12) de la rainure et, en même temps les branches (6) du U étant rabattues l'une vers l'autre et en s'écartant l'une de l'autre par un effet de ressort s'encastrent dans les parois latérales (13) de la rainure (12) en forme de U, et en ce que l'élément (1) de barre omnibus qui s'applique contre la partie centrale (8) a une configuration plate.

2. Barre omnibus selon la revendication 1, caractérisée en ce que l'encastrement entre l'élément isolant (5) et le support (10) s'effectue par des encoches d'encastrement (14) et des ergots (17) qui sont disposés sur les branches (6) en forme de U et les parois latérales (13) de la rainure (11).

3. Barre omnibus selon la revendication 2, caractérisée en ce que les encoches (14) sont prévues sur les parois latérales (13) de la rainure (11) et les ergots (17) sur les branches (6) en forme de U de l'élément isolant (5).

4. Barre omnibus selon la revendication 2 ou 3, caractérisée en ce que les ergots d'encastrement 17 sont prévus au voisinage des extrémités libres des branches (6) en forme de U de l'élément isolant (5).

5. Barre omnibus selon l'une des revendications 2 à 4, caractérisé en ce que les encoches d'encastrement (14) et les ergots (17) forment respectivement un cône dont l'arête d'encastrement (15) s'étend sensiblement perpendiculairement à l'axe de la fente formée par les branches (6) en forme de U et dont le côté plat (16) fait suite à ladite arête d'encastrement (15), vu en direction du fond (12) de la fente.

6. Barre omnibus selon l'une des revendications 1 à 5, caractérisée en ce que les branches (6) en forme de U de l'élément isolant (5) font saillie de la rainure (11) et que les zones en saillie (21) des branches (6) en forme de U de l'élément isolant (5) de barres omnibus adjacent s'appliquent l'une contre l'autre.

7. Barre omnibus selon l'une des revendications 1 à 6, caractérisée en ce que les côtés étroits (4) de l'élément (1) de barre omnibus s'étendent obliquement l'un vers l'autre, que les deux arêtes se trouvant entre les côtés étroits (4) et le côté plat (3) de l'élément (1) venant s'appliquer contre l'élément central (8) de l'isolant (5) présentent une distance supérieure entre elles à celle des deux arêtes se trouvant entre lesdits côtés étroits (4) et le côté plat (2) de l'élément (1), ce côté plat étant orienté vers la fente formée par les branches (6) du U de l'isolant (5) et en ce que les côtés intérieurs (18) orientés l'un vers l'autre de cette branche (6) en forme de U sont réalisés de manière conforme à l'obliquité desdits côtés étroits (4) au voisinage de ces derniers lorsque l'isolant (5) est encastré avec le support (10).

8. Barre omnibus selon la revendication 7, caractérisé en ce que l'élément (1) de barre omnibus est constitué en un matériau rectangulaire qui est déformé en son centre en forme de V dont la pointe est dirigée vers le fond (12) de la rainure.

9. Barre omnibus selon la revendication 8, caractérisée en ce que l'élément central (8) de l'isolant (5) présente en son centre une autre articulation (9).

10. Barre omnibus selon l'une des revendications 1 à 9, caractérisée en ce que les côtés intérieurs (19) des branches (6) en forme de U de l'isolant (5) s'étendent l'un vers l'autre en forme de V en direction du fond (12) de la rainure et que cette zone (19) en forme de V s'étend entre l'ouverture de la fente et environ les deux-tiers de la longueur des branches (6) en forme de U.

11. Barre omnibus selon l'une des revendications 1 à 10, caractérisée en ce que les bords (20) de la rainure (11) sont arrondis.

12. Barres omnibus selon l'une des revendications 1 à 11, caractarisées en ce que, au moins l'une des branches (6) en forme de U de l'élément isolant (5) présente, à son extrémité libre, une lèvre (22) au-dessus d'une articulation (23), lèvre qui est maintenue sensiblement à angle droit par rapport à ladite branche (6) du U sous l'effet de l'articulation (23) et qui, à l'état monté, recouvre la fente entre les branches (6) en forme de U.

13. Procédé de montage pour une barre omnibus selon l'une des revendications 1 à 12, caractérisé en ce que l'élément de barre (1) et l'isolant (5) sont retirés, sous la forme d'une bande, d'une bobine et que l'élément de barre (1) est guidé en direction de l'élément central (8) de l'isolant (5) et que les deux éléments (1) et (5) sont amenés ensemble vers le fond (12) de la rainure du support (10), tandis que les branches (6) en forme de U sont rabattues l'une contre l'autre jusqu'à ce que lesdites branches (6) s'encastrent avec les parois latérales (13) de la rainure (11) du support (10).
